# EUROPÄISCHE PATENTANMELDUNG

(11) **EP 1 612 653 A1**
(43) Veröffentlichungstag der Anmeldung: **04.01.2006**
(21) Anmeldenummer: 04015411.4
(22) Anmeldetag: 30.06.2004
(51) Int. Cl.: G06F 3/033, G06F 17/24, G06F 17/30

(54) **Scrolling-Vorrichtung mit Fixierungsmechanismus**

(71) Anmelder: SIEMENS AKTIENGESELLSCHAFT, 80333 München (DE)
(72) Erfinder: Weinländer, Markus, 91230 Happburg (DE); Windl, Helmut, 93077 Peisig (DE)

(57) **Zusammenfassung**

Die Erfindung betrifft eine Scrolling-Vorrichtung zur Verschiebung von in einem Anzeigebereich (3) angezeigten Informationen (I) mit Erkennungsmitteln zur Identifizierung übergeordneter Elemente (1) aus den angezeigten Informationen (T) und Fixierungsmitteln zur Fixierung der Position (Fix) mindestens eines übergeordneten Elements innerhalb des Anzeigebereichs, wobei die Fixierungsmittel derart ausgebildet sind, dass das mindestens eine übergeordnete Element fixiert bleibt, solange mindestens ein dem übergeordneten Element (1) zugeordnetes untergeordnetes Element (2) im Anzeigenbereich (3) sichtbar ist.

## Beschreibung

Die Erfindung betrifft eine Scrolling-Vorrichtung zur Verschiebung von in einem Anzeigebereich angezeigten Informationen. Des Weiteren betrifft die Erfindung ein entsprechendes Scrolling-Verfahren.

Auf Bildschirmen muss häufig eine größere Datenmenge angeboten werden, als bei vernünftiger Lesbarkeit dargestellt werden kann. Deshalb wird nur ein Ausschnitt der Datenmenge angezeigt. Den sichtbaren Ausschnitt kann ein Benutzer durch eine sogenannte Scrollbar verschieben.

Scrollbars sind ein gut bekanntes und leicht verständliches Werkzeug für den Anwender. Deshalb werden sie in nahezu allen PC-Applikationen eingesetzt. Scrollbars haben jedoch den Nachteil, dass Informationen, die zum Verständnis eines bestimmten angezeigten Bereiches wichtig sind, beim Verschieben unter Umständen aus dem sichtbaren Ausschnitt herauswandern. Ein Nutzer entsprechender Applikationen kann somit unter Umständen leicht den Überblick über die Zuordnung bestimmter Informationen zu übergeordneten Elementen bzw. Ebenen verlieren. Dieser Nachteil tritt insbesondere bei Web-orientierten Sichten und bei sogenannten Tree-Controls auf.

Bei Web-orientierten Sichten können beispielsweise Tabellen oder Listen irgendwo innerhalb einer Website eingesetzt werden. Wenn nun ein Benutzer den sichtbaren Ausschnitt einer Website mit derartigen Tabellen oder Listen mit Hilfe der Scrollbar verschiebt, führt das dazu, dass als erstes die entsprechende Tabellenüberschrift aus dem sichtbaren Ausschnitt verschwindet. Die folgenden einzelnen Tabellenfelder können mangels einer geeigneten Beschriftung nicht mehr ihrer entsprechenden Bedeutung zugeordnet werden. Dies ist insbesondere nachteilig bei komplexen Tabellen, wie sie z.B. zur Parametrierung technischer Anlagen verwendet werden.

Der gleiche Effekt tritt in sogenannten Tree-Controls auf, mit denen eine Vielzahl von Elementen in ihrer hierarchischen Beziehung angezeigt werden. Wird hier der sichtbare Ausschnitt durch den Benutzer verschoben, so sind zwar die einzelnen Elemente sichtbar, nicht mehr aber die übergeordneten Knoten des Baumes. Dies kann vor allem dann ungünstig sein, wenn die übergeordneten Knoten zur Bedeutung beitragen. Beispielsweise mag es wichtig sein, ob entsprechende Elemente im Ordner "fertig und getestet" oder im Ordner "Schrott" gespeichert sind.

Der Erfindung liegt daher die Aufgabe zugrunde, eine Scrolling-Vorrichtung und ein Scrolling-Verfahren anzugeben, bei dem übergeordnete Informationselemente für einen Benutzer sichtbar bleiben.

Die Aufgabe wird gelöst durch eine Scrolling-Vorrichtung zur Verschiebung von in einem Anzeigebereich angezeigten Informationen mit Erkennungsmitteln zur Identifizierung übergeordneter Elemente auf den angezeigten Informationen und Fixierungsmitteln zur Fixierung der Position mindestens eines übergeordneten Elements innerhalb des Anzeigebereichs, wobei die Fixierungsmittel derart ausgebildet sind, dass das mindestens eine übergeordnete Element fixiert bleibt, solange mindestens ein dem übergeordneten Element zugeordnetes untergeordnetes Element im Anzeigenbereich sichtbar ist.

Des Weiteren wird die Aufgabe gelöst durch ein Scrolling-Verfahren zur Verschiebung von in einem Anzeigebereich angezeigten Informationen, bei dem übergeordnete Elemente aus den angezeigten Informationen identifiziert werden und die Position mindestens eines übergeordneten Elements innerhalb des Anzeigebereichs fixiert wird, wobei das mindestens eine übergeordnete Element fixiert bleibt, solange mindestens ein dem übergeordneten Element zugeordnetes untergeordnetes Element im Anzeigebereich sichtbar ist.

Der Erfindung liegt die Erkenntnis zugrunde, dass beim Verschieben von in einem Fenster angezeigten Informationen, also beim sogenannten Scrolling, ein Benutzer auch übergeordnete Informationen, die für das Verständnis von untergeordneten folgenden Informationen wichtig sind, in der Regel aus dem sichtbaren Bereich früher oder später herausschieben muss. Beispielsweise kann es sich hierbei um Tabellenüberschriften oder um hierarchisch höher strukturierte Ordner eines Tree-Controls handeln. In dem Moment, wo mittels des Scrollbars die übergeordneten Informations-Inhalte aus dem Anzeigebereich herausgeschoben werden, verliert der Benutzer einen Überblick über den Kontext der im Fenster angezeigten Informationen.

Dies ist insbesondere von Nachteil, wenn komplexe Sachverhalte, beispielsweise in großen Tabellen dargestellt werden. Insbesondere auch bei der Verwendung von Web-Ansichten, in denen sich normale Textelemente und Tabellen abwechseln können, ist es vorteilhaft, wenn Tabellenüberschriften als solche erkannt werden und aus dem Anzeigenbereich nicht herausgescrollt werden, solange ihnen zugeordnet weitere Informationen bzw. Tabelleninhalte auf dem sichtbaren Bereich der Anzeige dargestellt werden.

Ebenso vorteilhaft ist es im Umfeld von größeren Textdokumenten, beispielsweise Word-Dokumenten oder Dateien in anderen Textverarbeitungssystemen, bei denen zu unterschiedlich hierarchisch strukturierten Überschriften jeweils Textelemente in längeren Absätzen erscheinen. Scrollt ein Benutzer durch das Word-Dokument, so können hier Überschriften am Rande des Anzeigenfelds stehen bleiben und der entsprechende, zur Überschrift gehörende Text kann wie üblich durchgescrolled werden. Hierdurch hat der Anwender des Textverarbeitungssystems immer einen Überblick darüber, zu welchem Kapitel bzw. zu welcher Überschrift der gerade mittels des Scrollbars durch das sichtbare Fenster bewegte Teil des Textes gehört.

Vorteilhafterweise werden im Rahmen des erfindungsgemäßen Systems den übergeordneten Elementen, also beispielsweise Tabellenüberschriften, übergeordneten Ordnern in einem Tree-Controls oder Überschriften eines Text-Dokuments Kennzeichen zugewiesen, anhand derer sie vom System bzw. von den Erkennungsmitteln der Scrolling-Vorrichtung als übergeordnete Elemente identifiziert werden können. Wandert ein derartiges übergeordnetes Element im Rahmen eines Scrolling-Vorganges über den sichtbaren Bereich bzw. über die Anzeige, so wird es als solches erkannt und von den Fixierungsmitteln nach Durchlaufen der Anzeige in einer Position festgehalten, so dass es dem Benutzer des Systems auch bei Fortführung des Scrolling-Vorganges möglich ist, die entsprechende übergeordnete Information nach wie vor zu sehen.

Eine weitere vorteilhafte Ausbildung der Erfindung ist dadurch gekennzeichnet, dass das mindestens eine übergeordnete Element nach Durchlaufen des Anzeigenbereichs fixiert wird. Dies ist insbesondere von Vorteil, da beispielsweise eine Tabellenüberschrift in diesem Fall von unten in den sichtbaren Anzeigenbereich hineinwandert beim Durchführen eines Scrolling-Vorganges und nachdem sie den entsprechenden Anzeigenbereich vollständig durchlaufen hat am oberen Ende des Anzeigenbereiches in ihrer Position fixiert wird, bevor sie den sichtbaren Anzeigenbereich verlässt. Auf diese Art und Weise ist bereits eine ganze Menge zugehöriger untergeordneter Elemente auf dem Anzeigenbereich zu sehen. Der Anzeigenbereich kann sich somit erst mal mit zugehöriger Information füllen, bevor die untergeordneten Elemente unter der fixierten Überschrift bzw. unter dem fixierten übergeordneten Element den Bildschirm am Bildschirmrand verlassen.

Eine weitere vorteilhafte Ausbildung der Erfindung ist dadurch gekennzeichnet, dass bei einer horizontalen Verschiebung der Informationen eine Fixierung der Position des mindestens einen übergeordneten Elements an einem senkrechten Rand des Anzeigenbereichs erfolgt bzw. dass bei einer senkrechten Verschiebung der Informationen eine Fixierung der Position des mindestens einen übergeordneten Elements an einem horizontalen Rand des Anzeigenbereichs erfolgt.

Durch diese vorteilhafte Ausbildung der Erfindung ist es möglich, sowohl senkrechte Scrollbars zur senkrechten Verschiebung von Informationen zu verwenden als auch horizontale Scrollbars, beispielsweise am unteren Rand eines entsprechenden Anzeigenfensters zur horizontalen Verschiebung von Informationen. Hierdurch können mit Hilfe des erfindungsgemäßen Systems unübersichtliche Datenmengen, welche sowohl in der Höhe als auch in Breite über den darstellbaren Bereich hinausragen derart genutzt werden, dass übergeordnete Informationen am entsprechenden Rand des Anzeigenfensters fixiert werden. Sowohl waagerechtes als auch senkrechtes Scrolling wird dadurch unterstützt.

Eine weitere vorteilhafte Ausbildung der Erfindung ist dadurch gekennzeichnet, dass die Erkennungsmittel zur identifizierung einer Hierarchie der übergeordneten Elemente vorgesehen sind und dass die Fixierungsmittel zur Fixierung der Position übergeordneter Elemente in Abhängigkeit von ihrer Hierarchie-Ebene vorgesehen sind. Hierdurch wird es möglich, unterschiedlichen Hierarchie-Ebenen bzw. unterschiedlichen Strukturen von Informationen verschiedene Kennungen zuzuweisen und in Abhängigkeit von diesen unterschiedlichen Kennungen die Informationen nach Durchscrollen des Anzeigenbereiches am Bildschirmrand in ihrer Position fixieren zu lassen. Eine gleichzeitige Fixierung mehrerer Hierarchie-Ebenen bzw. eine ausschließliche Fixierung der Position einzelner Hierarchie-Ebenen wird durch diese vorteilhafte Ausbildung der Erfindung ermöglicht.

Eine weitere vorteilhafte Ausbildung der Erfindung ist dadurch gekennzeichnet, dass Auswahlmittel zur Auswahl der durch die Fixierungsmittel zu fixierenden Hierarchie-Ebenen der übergeordneten Elemente durch einen Benutzers der Scrolling-Vorrichtung vorgesehen sind. Hierdurch kann im Rahmen einer Applikation durch den Benutzer, beispielsweise mit Hilfe eines Pulldown-Menüs über die Verwendung von sogenannten Radio-Buttons oder anzukreuzenden Kästchen eine oder mehrere übergeordnete Hierarchie-Ebenen ausgewählt werden, die beim Durchscrollen durch das entsprechende Dokument in ihrer Position am Rand des Anzeigenbereichs fixiert werden sollen. Dem Benutzer ist hierdurch möglich, eine beliebige Auswahl der zu fixierenden Informationselemente zu treffen. Beispielsweise mag beim Durchscrollen eines umfangreichen Word-Dokuments jeweils nur die zum Textbereich dazugehörige direkte Überschrift relevant sein, während alle höherwertigen Überschriften für den Benutzer keinen zusätzlichen Informationsgehalt bieten. Andererseits mag es durchaus wichtig sein, dass einzelne Textelemente einer in der Hierarchie der Überschriften weiter oben angesiedelten Hierarchie-Ebene zugeordnet sind, damit der Benutzer den entsprechenden Überblick über eine höherwertige, gröbere Struktur des Textes behält.

Eine weitere vorteilhafte Ausbildung der Erfindung ist dadurch gekennzeichnet, dass die übergeordneten Elemente als Tabellen, Kopfzeilen und/oder Dokumentüberschriften und/oder eines Tree-Controls ausgebildet sind. Hierdurch wird im Rahmen des erfindungsgemäßen Systems die Möglichkeit geschaffen, unterschiedliche Formen von Dokumenten mit Hilfe einer entsprechenden Scrolling-Vorrichtung zur Anzeige zu bringen.

Im Folgenden wird die Erfindung anhand der in den Figuren dargestellten Ausführungsbeispiele näher beschrieben und erläutert.

### Es zeigen:

- FIG 1: eine beispielhafte Ausführung des erfindungsgemäßen Systems mit einer Tabelle,
- FIG 2: eine Ausführung gemäß Fig 1 mit fixierten übergeordneten Elementen,
- FIG 3: eine beispielhafte Abbildung der Scrolling-Vorrichtung mit einem Tree-Controls,
- FIG 4: eine Ausführung gemäß Fig 3 mit fixierten übergeordneten Elementen.

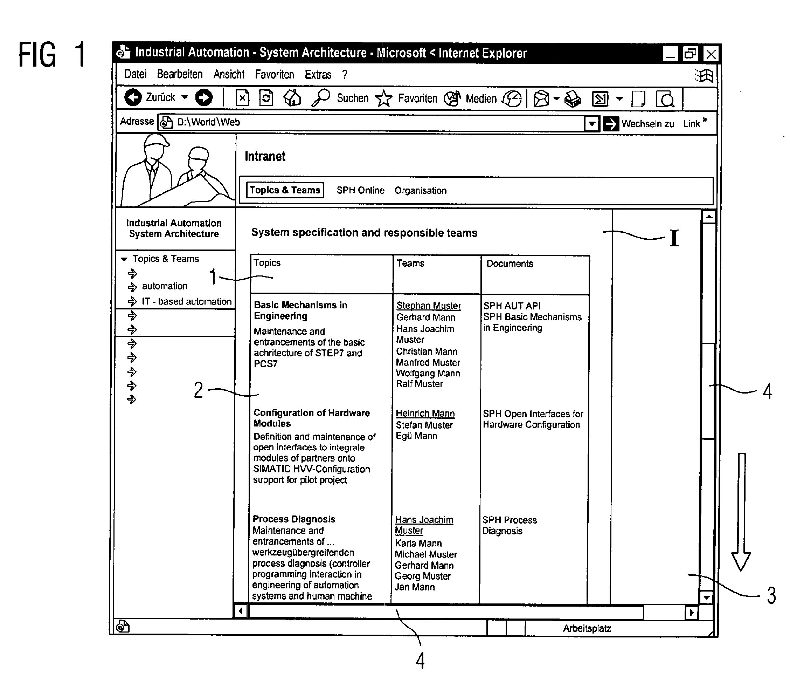

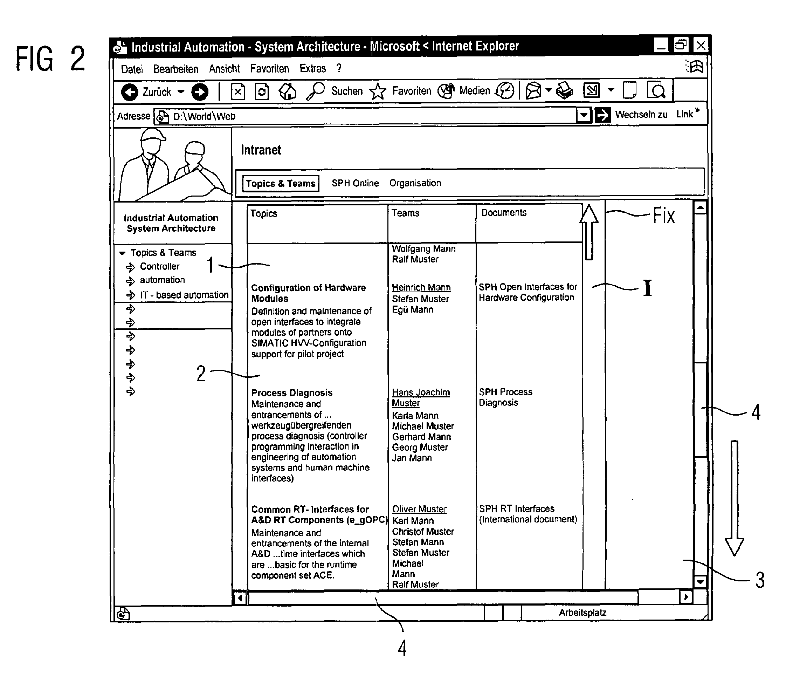

FIG 1 und FIG 2 zeigen eine Oberfläche, beispielsweise eines Monitors, mit einem Anzeigenbereich 3, in dem Informationen I dargestellt werden. Mit Hilfe eines Scrollbars 4 können die Informationen I im Anzeigenbereich 3 derart verschoben werden, so dass immer nur ein Teil der Informationen I sichtbar ist. Bei großen Dokumenten kann der Benutzer mit Hilfe des Scrollbars 4 somit verschiedene Teile in dem Anzeigenbereich 3 darstellen lassen. Ein Scrollbar 4 kann sowohl für die vertikale Verschiebung der Informationen als auch für die horizontale Verschiebung der Informationen genutzt werden. Damit können sowohl in senkrechter als auch in waagerechter Ausbreitung mehr Informationen dargestellt werden, als im eigentlichen Anzeigenbereich zu sehen sind. Mit Hilfe der erfindungsgemäßen Scrolling-Vorrichtung bzw. des Verfahrens werden beispielsweise Tabellen-Kopfzeilen als übergeordnete Elemente 1 gekennzeichnet und können mit Hilfe von Erkennungsmitteln als solche dann beim Scrollen durch einen Benutzer identifiziert werden. Diesen übergeordneten Elementen 1 sind untergeordnete Elemente 2 zugeordnet. Die übergeordneten Elemente 1 werden mit Hilfe von Fixierungsmitteln beim Scrollen durch die entsprechende Seite dann auf dem Anzeigenbereich 3 in einer sichtbaren Position Fix fixiert, solange ihnen zugeordnete untergeordnete Elemente 2, beispielsweise ein Tabelleninhalt in dem Anzeigenbereich 3 sichtbar ist.

Beim Scrollen durch eine Website, wie sie in FIG 1 dargestellt ist, wird beispielsweise durch eine Abwärtsbewegung, wie sie durch die Pfeilrichtung angegeben ist, die entsprechende Seite nach oben hin aus dem Anzeigenbereich 3 herausbewegt. Über der Tabelle bzw. über der Kopfzeile der Tabelle, welche einem übergeordneten Element 1 entspricht, ist am Anfang der Bewegung noch normaler Text zu sehen. Sobald nun oberhalb der Tabellen-Kopfzeile also des übergeordneten Elements 1 keine weiteren Elemente angezeigt werden - d.h. sobald die Tabellen-Kopfzeile am oberen Rand des sichtbaren Abschnitts 3 angelangt ist, definiert dieser obere Rand einen "Anschlag" für die Tabellen-Kopfzeile. Dieser ist in FIG 2 mit dem Bezugszeichen Fix gekennzeichnet. Weiteres Verschieben des Scrollbars 4 durch den Benutzer verschiebt nur noch den Tabellen-Inhalt, also die dem übergeordneten Element 1 zugeordneten untergeordneten Elemente 2. Erst wenn der komplette Tabellen-Inhalt, d.h. sämtliche untergeordneten Elemente 2 aus dem sichtbaren Ausschnitt bzw. dem Anzeigenbereich 3 geschoben werden, verschwindet auch das übergeordnete Element 1 in diesem Fall die Tabellen-Kopfzeile.

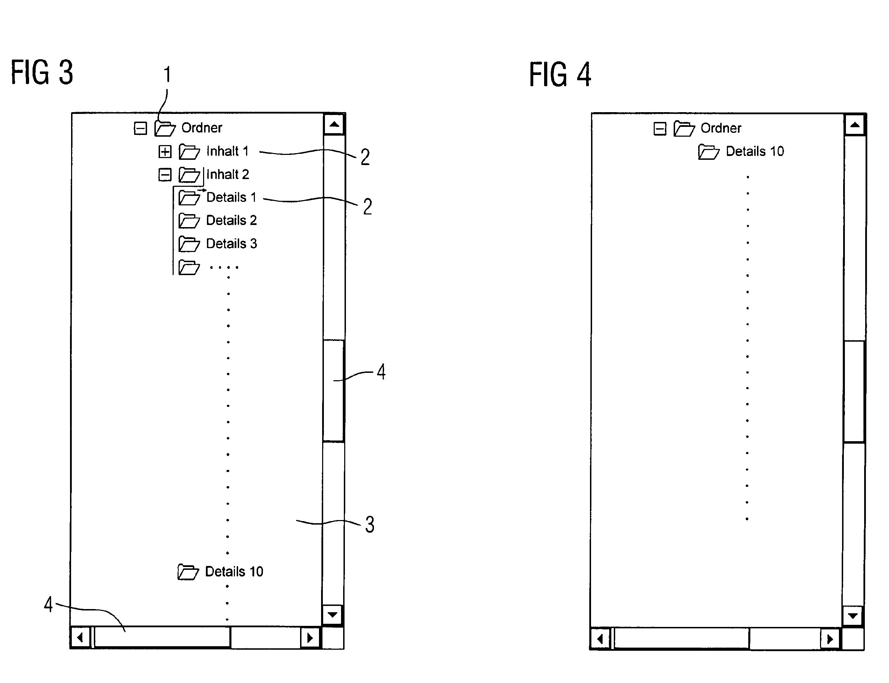

FIG 3 und FIG 4 zeigen eine weitere Ausführung der Erfindung, bei dem die Scrolling-Vorrichtung zum Navigieren innerhalb eines Tree-Controls verwendet wird. Hierbei sind innerhalb des Tree-Controls Ordner in verschiedenen Hierarchie-Ebenen strukturiert. Bei Verschieben des entsprechenden Scrollbars können Ordner, welche in der Hierarchie weiter oben stehen, als sogenannte übergeordnete Elemente 1 gekennzeichnet sein, und bleiben entsprechend am oberen Rand des Fensters stehen, während die ihnen zugeordneten untergeordneten Elemente 2 aus dem Anzeigenbereich 3 herauswandern. Die übergeordneten Ordner bleiben auch in diesem Fall solange stehen, solange zugeordnete untergeordnete Elemente im Anzeigenbereich 3 sichtbar sind, wie in FIG 4 dargestellt. Je nachdem, welche Auswahl der Benutzer getroffen hat, können hierbei mehrere übergeordnete Elemente am Anschlag stehen bleiben. Der Benutzer kann außerdem auswählen, welche Hierarchie-Ebene am oberen Anschlag stehen bleiben soll.

Ebenso ist ein seitliches bzw. waagerechtes Scrollen möglich und hierbei kann der Benutzer ebenfalls mittels verschiedener Kennungen in unterschiedliche Hierarchien eingeordnete Elemente fixieren lassen. Beispielsweise können bei einem Tree-Controls übergeordnete Ordner einer oberen Hierarchie stehen bleiben, während mittels des waagerechten Scrollbars in Richtung der Ebene der Blätter verschoben wird. Passen nicht mehr alle Hierarchieebenen zwischen einer übergeordneten Hierarchie und den Blättern des Tree-Controls in den Bildschirmbereich, so könnten zwischengeordnete Hierarchieebenen seitlich weggescrollt werden, so dass nur eine zur Fixierung vorgesehene übergeordnete Ebene von Ordnern stehen bleibt.

Eine entsprechende Scrolling-Vorrichtung kann ebenso für die Fixierung von Überschriften in Textverarbeitungsdokumenten verwendet werden.

## Patentansprüche

1. Scrolling-Vorrichtung zur Verschiebung von in einem Anzeigebereich (3) angezeigten Informationen (I) mit
- Erkennungsmitteln zur Identifizierung übergeordneter Elemente (1) aus den angezeigten Informationen (T) und
- Fixierungsmitteln zur Fixierung der Position (Fix) mindestens eines übergeordneten Elements innerhalb des Anzeigebereichs, wobei die Fixierungsmittel derart ausgebildet sind, dass das mindestens eine übergeordnete Element fixiert bleibt, solange mindestens ein dem übergeordneten Element (1) zugeordnetes untergeordnetes Element (2) im Anzeigenbereich (3) sichtbar ist.

2. Scrolling-Vorrichtung nach Anspruch 1,
**dadurch gekennzeichnet,**
**dass** das mindestens eine übergeordnete Element (1) nach Durchlaufen des Anzeigenbereichs (3) fixiert wird.

3. Scrolling-Vorrichtung nach Anspruch 1 oder 2,
**dadurch gekennzeichnet,**
**dass** bei einer horizontalen Verschiebung der Informationen (I) eine Fixierung der Position (Fix) des mindestens einen übergeordneten Elements (1) an einem senkrechten Rand des Anzeigenbereichs (3) erfolgt.

4. Scrolling-Vorrichtung nach Anspruch 1 oder 2,
**dadurch gekennzeichnet,**
**dass** bei einer senkrechten Verschiebung der Informationen (I) eine Fixierung der Position (Fix) des mindestens einen übergeordneten Elements (1) an einem horizontalen Rand des Anzeigenbereichs (3) erfolgt.

5. Scrolling-Vorrichtung nach einem der Ansprüche 1 bis 4,
**dadurch gekennzeichnet,**
**dass** die Erkennungsmittel zur Identifizierung einer Hierarchie der übergeordneten Elemente (1) vorgesehen sind.

6. Scrolling-Vorrichtung nach Anspruch 5,
**dadurch gekennzeichnet,**
**dass** die Fixierungsmittel zur Fixierung der Position (Fix) übergeordneter Elemente in Abhängigkeit von ihrer Hierarchieebene vorgesehen sind.

7. Scrolling-Vorrichtung nach Anspruch 6,
**dadurch gekennzeichnet,**
**dass** Auswahlmittel zur Auswahl der durch die Fixierungsmittel zu fixierenden Hierarchieebenen der übergeordneten Elemente (1) durch einen Benutzer der Scrolling-Vorrichtung vorgesehen sind.

8. Scrolling-Vorrichtung nach einem der Ansprüche 1 bis 7,
**dadurch gekennzeichnet,**
**dass** die übergeordneten Elemente (1) als Tabellen-Kopfzeilen und/oder Dokumentüberschriften und/oder Ordner eines Tree-Controls ausgebildet sind.

9. Scrolling-Vorrichtung nach einem der Ansprüche 1 bis 8,
**dadurch gekennzeichnet,**
**dass** die Fixierung der Position (Fix) der übergeordneten Elemente (1) aufhebbar ist, wenn die zugeordneten untergeordneten Elemente (2) aus dem Anzeigenbereich (3) geschoben werden.

10. Scrolling-Verfahren zur Verschiebung von in einem Anzeigebereich angezeigten Informationen, bei dem
- übergeordneter Elemente aus den angezeigten Informationen identifiziert werden und
- die Position mindestens eines übergeordneten Elements innerhalb des Anzeigebereichs fixiert wird, wobei das mindestens eine übergeordnete Element fixiert bleibt, solange mindestens ein dem übergeordneten Element zugeordnetes untergeordnetes Element im Anzeigenbereich sichtbar ist.

11. Scrolling-Verfahren nach Anspruch 10,
**dadurch gekennzeichnet,**
**dass** das mindestens eine übergeordnete Element nach Durchlaufen des Anzeigenbereichs fixiert wird.

12. Scrolling-Verfahren nach Anspruch 10 oder 11,
**dadurch gekennzeichnet,**
**dass** bei einer horizontalen Verschiebung der Informationen die Position des mindestens einen übergeordneten Elements an einem senkrechten Rand des Anzeigenbereichs fixiert wird.

13. Scrolling-Verfahren nach Anspruch 10 oder 11,
**dadurch gekennzeichnet,**
**dass** bei einer senkrechten Verschiebung der Informationen die Position des mindestens einen übergeordneten Elements an einem horizontalen Rand des Anzeigenbereichs fixiert wird.

14. Scrolling-Verfahren nach einem der Ansprüche 10 bis 13,
**dadurch gekennzeichnet,**
**dass** eine Hierarchie der übergeordneten Elemente identifiziert wird.

15. Scrolling-Verfahren nach Anspruch 14,
**dadurch gekennzeichnet,**
**dass** die Position übergeordneter Elemente in Abhängigkeit von ihrer Hierarchieebene fixiert wird.

16. Scrolling-Verfahren nach Anspruch 15,
**dadurch gekennzeichnet,**
**dass** die zu fixierenden Hierarchieebenen der übergeordneten Elemente durch einen Benutzer ausgewählt werden.

17. Scrolling-Verfahren nach einem der Ansprüche 10 bis 16,
**dadurch gekennzeichnet,**
**dass** Tabellen-Kopfzeilen und/oder Dokumentüberschriften und/oder Ordner eines Tree-Controls übergeordnete Elemente sind.

18. Scrolling-Verfahren nach einem der Ansprüche 10 bis 17,
**dadurch gekennzeichnet,**
**dass** die Fixierung der Position (Fix) der übergeordneten Elemente (1) aufgehoben wird, wenn die zugeordneten untergeordneten Elemente (2) aus dem Anzeigenbereich (3) geschoben werden.
